# FASCICULE DE BREVET EUROPEEN

(11) **EP 3 215 728 B1**
(45) Date de publication et mention de la délivrance du brevet: **24.06.2020**
(21) Numéro de dépôt: 15793877.0
(22) Date de dépôt: 20.10.2015
(51) Int. Cl.: F02D 33/02, F02D 41/18, F02D 13/02, F02D 41/10, F02D 41/12, F02D 41/14

(54) **PROCÉDÉ D'ESTIMATION DE LA MASSE D'AIR ENFERMÉE DANS LA CHAMBRE DE COMBUSTION D'UN CYLINDRE DE MOTEUR THERMIQUE DE VÉHICULE AUTOMOBILE À DISTRIBUTION VARIABLE**
VERFAHREN ZUR ABSCHÄTZUNG DER IN EINEM BRENNRAUM EINES ZYLINDERS EINER FAHRZEUG-BRENNKRAFTMASCHINE MIT VARIABLER VENTILSTEUERUNG EINGESCHLOSSENEN LUFTMASSE
METHOD OF ESTIMATION OF THE AIR MASS TRAPPED IN A COMBUSTION CHAMBER OF A CYLINDER OF AN AUTOMOBILE-COMBUSTION ENGINE WITH VARIABLE VALVE TIMING

(30) Priorité: 04.11.2014 FR 1460610
(43) Date de publication de la demande: 13.09.2017
(73) Titulaire: PSA Automobiles SA, 78300 Poissy (FR)
(72) Inventeur: PACILLY, Christophe, F-78500 Sartrouville (FR); GABAUD, Alicia, F-92110 Clichy (FR)
(86) Numéro de dépôt international: PCT/FR2015/052810
(87) Numéro de publication internationale: WO 2016/071601

(56) Documents cités:
- EP-A1- 1 217 191
- EP-A1- 1 505 283
- EP-A2- 1 816 330
- EP-A2- 2 256 323

## Description

L'invention porte sur le contrôle commande d'un moteur thermique de véhicule automobile et notamment le contrôle de la position des actionneurs à calage variable des soupapes pour permettre une estimation très précise de la masse d'air enfermée dans la chambre de combustion d'un cylindre du moteur thermique.

Plus particulièrement, l'invention concerne un procédé d'estimation de la masse d'air enfermée dans la chambre de combustion d'un cylindre de moteur thermique de véhicule automobile à distribution variable.

Il a été proposé de développer une distribution variable pour l'injection de carburant en remplacement du système classique à cames, ce système classique étant dit à distribution fixe. La distribution variable désigne ici une technologie permettant de faire varier le phasage des soupapes d'admission et d'échappement. Pour ce faire, il est utilisé des actionneurs de distribution variable ou à calage variable des soupapes, communément dénommés actionneurs VVT selon l'abréviation pour l'appellation anglaise de Variable Valve Timing. Ces actionneurs seront désignés sous l'appellation d'actionneur de distribution variable dans ce qui suit. Ces actionneurs peuvent être par exemple du type électromagnétique, pneumatique ou hydraulique.

La distribution variable est une technologie permettant de faire varier plusieurs paramètres dans le moteur, essentiellement le calage, la durée d'ouverture et/ou la levée des soupapes d'admission et d'échappement. Ces paramètres varient essentiellement en fonction du régime, de la charge et de la demande d'accélération délivrée par le conducteur du véhicule par pression de son pied sur l'accélérateur.

Dans un moteur à distribution fixe, le remplissage en air est donné par une relation statique dépendant du régime et de la pression d'admission. Dans un moteur à distribution variable de type VVT, le remplissage dépend également des instants d'ouverture et de fermeture des soupapes d'admission et d'échappement.

Le pilotage de l'injection sur moteur essence est basé sur l'estimation d'une masse d'air frais enfermée dans la chambre de combustion. La masse de carburant injectée est proportionnelle à la masse d'air frais enfermée et à la richesse de consigne.

Afin de respecter la richesse de consigne, il est nécessaire que l'estimation de la masse d'air frais enfermée dans la chambre de combustion soit la plus juste possible. La masse d'air frais enfermée étant directement dépendante du positionnement des actionneurs de distribution variable, il est donc nécessaire que les informations de position des actionneurs de distribution variable soient les plus conformes à leur position effective lors des déplacements transitoires de ces actionneurs.

En effet, par exemple, l'injection étant fréquemment réalisée en phase d'échappement lors d'une injection indirecte, il est nécessaire de prédire la future masse d'air frais enfermée. Actuellement, pour ce faire, dans le contrôle commande du moteur, seule la position courante des actionneurs de distribution variable est utilisée.

Le grand désavantage de ce contrôle commande selon l'état de la technique le plus proche est qu'utiliser la position courante des actionneurs de distribution variable pour calculer la prédiction de masse d'air frais ne permet pas de respecter la précision attendue lors de transitoires de la distribution variable. Ce manque de précision de la masse d'air engendre le non-respect de la richesse de consigne, dégradant les émissions polluantes, la consommation ou l'agrément de conduite avec un manque de réponse du moteur en cas de pauvreté.

Le document FR-A-2 941 266 décrit un procédé de contrôle d'un moteur thermique comportant au moins un cylindre équipé d'au moins une soupape d'admission entraînée par un actionneur de distribution variable avec les étapes d'acquisition des consignes d'angle d'ouverture et de fermeture de la soupape d'admission, d'élaboration d'un modèle de remplissage du cylindre reliant la masse d'air aspirée par le cylindre aux angles d'ouverture et de fermeture de la soupape d'admission, de détermination d'une consigne de masse d'air aspirée au moyen du modèle de remplissage et des consignes d'angle d'ouverture et d'inversion du modèle de manière à relier l'angle de fermeture à la masse d'air aspirée et à l'angle d'ouverture, de détermination d'une consigne coordonnée de l'angle de fermeture au moyen du modèle, de la consigne de masse d'air aspirée et de la consigne d'angle d'ouverture et de contrôle de l'actionneur au moyen de la consigne coordonnée de fermeture et de la consigne d'ouverture de la soupape d'admission.

Ce document ne montre cependant pas une estimation de la masse d'air aspirée en fonction de la position des actionneurs de distribution variable, position qui aurait été corrigée par rapport à la position courante utilisée fréquemment.

Le document EP 1 217 191 A1 décrit un contrôle d'un moteur thermique comportant un procédé selon la préambule de la revendication 1.

Par conséquent, le problème à la base de l'invention est, d'augmenter la précision de la future masse d'air enfermée dans la chambre de combustion d'un cylindre du moteur thermique d'un véhicule automobile selon des positions des actionneurs de distribution variable réajustées par rapport à leur position courante.

Pour atteindre cet objectif, il est prévu selon l'invention un procédé d'estimation de la masse d'air enfermée dans la chambre de combustion d'un cylindre de moteur thermique de véhicule automobile à distribution variable, le cylindre comprenant des soupapes d'admission et d'échappement actionnées chacune par un actionneur de distribution variable spécifique, comprenant les étapes de :
- mesure de la position courante des actionneurs de distribution variable pour chacune des soupapes du cylindre,
- prédiction de l'instant de fermeture de la soupape d'échappement et des instants d'ouverture et de fermeture de la soupape d'admission, en fonction des positions courantes mesurées,
- estimation de la masse d'air estimée à partir des instants de fermeture de la soupape d'échappement et des instants d'ouverture et de fermeture de la soupape d'admission prédits,
caractérisé en ce que dans l'étape de prédiction, la position courante de chacun desdits actionneurs de distribution variable est corrigée en fonction de la position de consigne (Pos VTT cons sat filt) de chacun des actionneurs.

L'effet technique est d'obtenir une estimation de masse d'air enfermée la plus proche de la réalité. Le fonctionnement du moteur thermique en est grandement amélioré avec une quantité de carburant à injecter calculée à partir de cette estimation de masse d'air enfermée qui correspond à la masse réellement enfermée dans la chambre de combustion, la masse de carburant à injecter étant proportionnelle à la masse d'air frais enfermée et à la richesse de consigne.

De plus, la correction de la position courante mesurée comprend le calcul d'un gradient de position de consigne et le calcul des durées séparant l'instant du calcul respectivement de l'instant de fermeture de la soupape d'échappement et des instants d'ouverture et de fermeture de la soupape d'admission du cylindre.

Avantageusement, l'instant de calcul, l'instant de fermeture de la soupape d'échappement et les instants d'ouverture et de fermeture de la soupape d'admission sont référencés en fonction de l'angle de vilebrequin du moteur obtenus auxdits instants en donnant respectivement un angle de calcul, un angle de fermeture de la soupape d'échappement et des angles d'ouverture et de fermeture de la soupape d'admission.

Avantageusement, il est procédé aux calculs de l'instant de fermeture de la soupape d'échappement et des instants d'ouverture et de fermeture de la soupape d'admission pour le cylindre en phase d'échappement à une fréquence fixe.

Avantageusement, il est procédé aux mesures courantes de l'angle de fermeture de la soupape d'échappement et des angles d'ouverture et de fermeture de la soupape d'admission, à ces mesures courantes étant additionné le produit du gradient de position de consigne avec la durée correspondante séparant l'instant du calcul respectivement à l'instant de fermeture de la soupape d'échappement ou aux instants d'ouverture et de fermeture de la soupape d'admission du cylindre pour l'obtention des instants prédits respectivement de fermeture de la soupape d'échappement, d'ouverture et de fermeture de la soupape d'admission.

Avantageusement, la position de consigne de chaque actionneur est une position de consigne saturée et filtrée.

Avantageusement, la position de consigne de chaque actionneur est saturée et filtrée par une limitation de pente permettant une modélisation de la vitesse maximale de l'actionneur et par un filtre d'ordre deux permettant une modélisation de l'actionneur en ce qui concerne son asservissement en position.

L'invention concerne aussi un moteur thermique à injection indirecte selon la revendication 7.

Avantageusement, le moteur thermique comprend au moins un actionneur de soupape d'admission qui autorise, à ouverture de soupape d'admission et fermeture de soupape d'admission constantes, au moins deux évolutions de la distance d'ouverture de la soupape d'admission et au moins un actionneur de soupape d'échappement qui n'autorise, à ouverture de soupape d'échappement et fermeture de soupape d'échappement constantes, qu'une seule évolution de la distance d'ouverture de la soupape.

L'invention concerne aussi un véhicule automobile, caractérisé en ce qu'il comprend un tel moteur thermique.

D'autres caractéristiques, buts et avantages de la présente invention apparaîtront à la lecture de la description détaillée qui va suivre et au regard des dessins annexés donnés à titre d'exemples non limitatifs et sur lesquels :

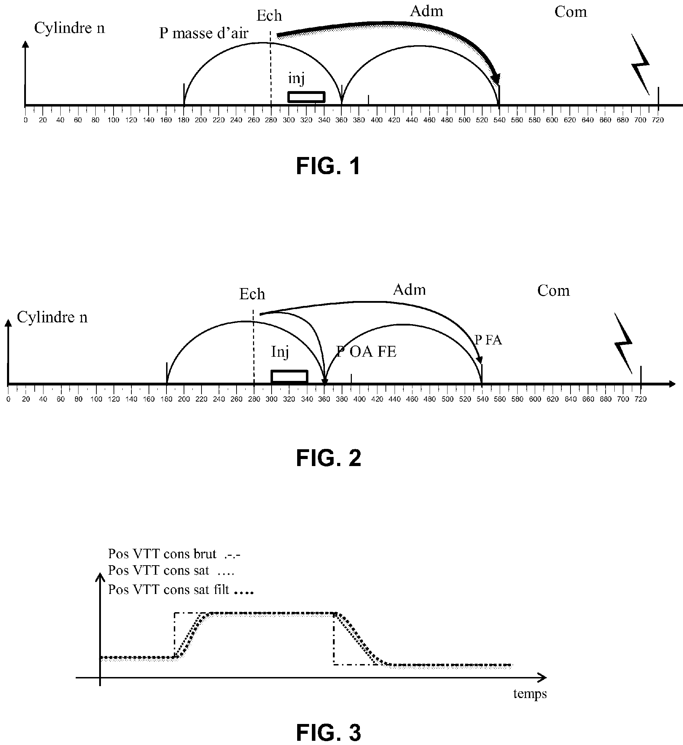

- la figure 1 est une représentation d'une courbe en fonction du temps montrant la prédiction de la masse d'air enfermée pour la fin de la phase d'admission, cette prédiction pouvant être établie conformément à un procédé selon la présente invention,
- la figure 2 est une représentation d'une courbe en fonction du temps montrant la prédiction de l'angle de fermeture de la soupape d'échappement et des angles d'ouverture et de fermeture de la soupape d'admission pour la prédiction de la masse d'air enfermée, ces prédictions pouvant être établies conformément à un procédé selon la présente invention,
- la figure 3 est une représentation en fonction du temps de trois courbes de positionnement de l'actionneur de distribution variable de consigne, respectivement brute, saturée, saturée et filtrée, de telles valeurs de consigne pouvant être prises en compte dans le procédé selon la présente invention,

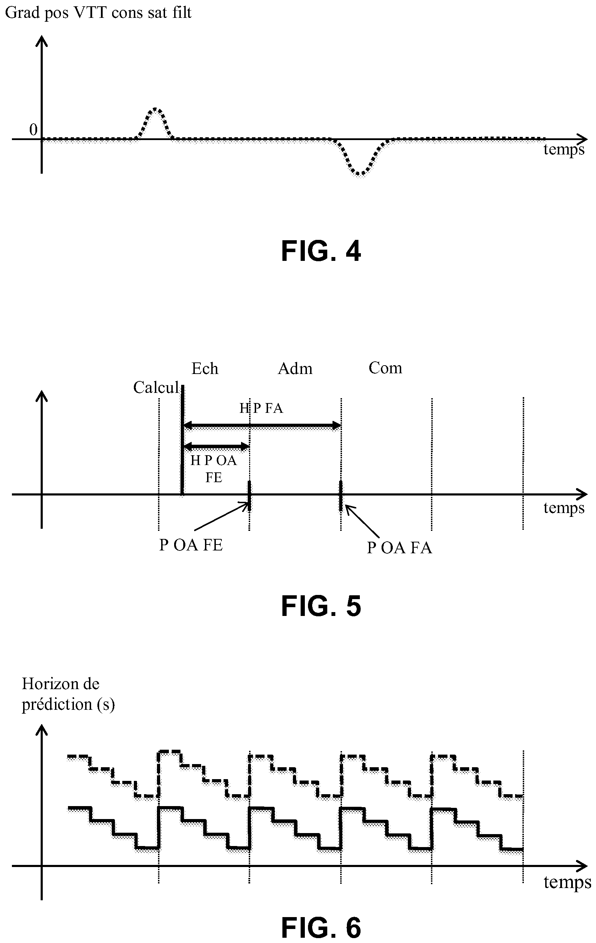

- la figure 4 est une représentation en fonction du temps d'une courbe de gradient de position d'un actionneur de distribution variable de consigne, saturé et filtré, un tel gradient de position pouvant être pris en compte dans le procédé selon la présente invention,
- la figure 5 est une représentation en fonction du temps du calcul de l'horizon de prédiction, durée séparant le moment du calcul, de l'angle du vilebrequin auquel la position d'un actionneur spécifique de distribution variable doit être prédite, un tel horizon de prédiction pouvant être pris en compte dans le procédé selon la présente invention,
- la figure 6 montre deux courbes d'horizon de prédiction en fonction du temps respectivement d'une part, pour le croisement de la fermeture de la soupape d'échappement et l'ouverture de la soupape d'admission et, d'autre part, pour la fermeture de la soupape d'admission, ces deux courbes pouvant être prises en compte dans le procédé selon la présente invention.

Il est à garder à l'esprit que les figures sont données à titre d'exemples et ne sont pas limitatives de l'invention.

L'invention va maintenant être décrite dans le cas préféré mais non limitatif d'un moteur thermique à injection indirecte de carburant. Un tel moteur comprend au moins un cylindre présentant en son intérieur un piston, le cylindre définissant une chambre de combustion. Un injecteur de carburant est prévu dans un conduit pour injecter le carburant dans l'air frais admis à l'intérieur de la chambre de combustion. Ainsi, le mélange air frais/carburant commence à se produire à l'intérieur du conduit d'air d'admission.

Le conduit d'admission d'air frais débouche dans la chambre de combustion par l'intermédiaire d'une ouverture d'admission avec la présence d'une soupape d'admission déplaçable entre une position fermée dans laquelle elle ferme de façon étanche à l'air frais l'ouverture d'admission et une position ouverte dans laquelle l'air frais peut être admis à l'intérieur de la chambre. La soupape d'admission est déplacée entre sa position ouverte et sa position fermée par un actionneur de soupape d'admission. Dans le cas d'une injection indirecte, cet actionneur est un actionneur VTT, autrement appelé actionneur de distribution variable. Dans ce qui suit les actionneurs VTT seront nommés actionneurs de distribution variable.

Du côté de l'échappement de la chambre de combustion du cylindre du moteur thermique, il est prévu une soupape d'échappement munie de son propre actionneur de distribution variable.

Dans un mode de réalisation préférentielle de l'invention, l'actionneur de soupape d'admission autorise une loi de levée variable, c'est-à-dire autorise, à ouverture de soupape d'admission et fermeture de la soupape d'admission constantes, plus d'une évolution de la distance d'ouverture de la soupape d'admission.

Par contre, l'actionneur de soupape d'échappement n'autorise pas une loi de levée variable, c'est-à-dire qu'à ouverture et fermeture de soupape d'échappement constantes, une seule évolution de la distance d'ouverture de la soupape n'est possible. Entre le moment de fermeture d'une soupape d'échappement et le moment d'ouverture d'une soupape admission, il peut se produire un croisement des soupapes.

En se référant à toutes les figures, la présente invention concerne un procédé de prédiction de la masse d'air, P masse air, enfermée dans la chambre de combustion d'un cylindre de moteur thermique de véhicule automobile à distribution variable. Comme précédemment mentionné, le cylindre comprend des soupapes d'admission et d'échappement actionnées chacune par un actionneur de distribution variable spécifique.

Dans ce procédé, la masse d'air enfermée est estimée selon la prédiction respective de l'instant de fermeture de la soupape d'échappement FE et des instants d'ouverture et de fermeture de la soupape d'admission OA, FA et s'effectue en fonction de la position courante des actionneurs de distribution variable pour chacune des soupapes du cylindre.

Pour améliorer la précision de l'estimation du remplissage prédit, notamment pendant des périodes transitoires de fonctionnement des actionneurs de distribution variable, la position courante de chacun desdits actionneurs de distribution variable est corrigée en fonction de la position de consigne Pos VTT cons sat filt de chacun des actionneurs.

En effet, dans un tel moteur thermique, la masse de carburant étant calculée et injectée en phase d'échappement, il est nécessaire de prédire pendant la phase d'échappement la masse d'air frais admise en fin de la prochaine phase d'admission du cylindre considéré. Cette masse d'air frais permettra de calculer la masse de carburant à injecter et donc d'obtenir un mélange air/carburant de la richesse souhaitée.

Afin de prédire avec suffisamment de précision la masse d'air frais qui sera admise à la fin de la future phase d'admission, il est très avantageux de connaître le positionnement des actionneurs au moment des phénomènes physiques de transvasement de gaz mis en jeu lors de la phase admission.

Aux figures 1, 2 et 5, les termes Ech, Adm, Com désignent respectivement l'échappement, l'admission et la combustion dans la chambre de combustion du cylindre du moteur tandis que inj désigne la période d'injection de carburant dans la chambre aux figures 1 et 2 et cylindre n un cylindre du moteur thermique. Le terme P OA FE indique la prédiction P de l'instant d'ouverture de la soupape d'admission OA et de l'instant de fermeture de la soupape d'échappement FE tandis que le terme P FA indique la prédiction P de l'instant de fermeture de la soupape d'admission FA.

Dans un premier temps, il est donc nécessaire de prédire l'instant de fermeture des soupapes d'échappement FE et l'instant d'ouverture des soupapes d'admission OA afin de déterminer le croisement de soupapes. L'horizon de prédiction pour ces deux angles sera donc au milieu du croisement de soupapes, en fin de phase d'échappement.

Dans un deuxième temps, il est nécessaire de prédire le moment de fermeture de la soupape d'admission FA à la fin de la phase admission afin de déterminer l'impact de l'acoustique de l'admission sur le remplissage en masse d'air de la chambre de combustion associée du moteur thermique du véhicule automobile.

Afin de pouvoir prédire la future position des instants OA, FE et FA, ces instants pouvant être mesurés selon des angles du vilebrequin, la présente invention propose de se baser sur la consigne de position de chacun des actionneurs de distribution variable afin de pouvoir effectuer une projection de la future position de ces actionneurs en fonction de leur position actuelle.

Comme montré à la figure 3, à partir d'un modèle d'actionneurs de distribution variable, il est calculé une position de consigne, de préférence une position de consigne saturée et filtrée dite Pos VTT cons sat filt pour chaque actionneur qui représente un modèle plus fidèle du fonctionnement réel de l'actionneur. Les trois courbes de cette figure illustrent la position de consigne brute, c'est-à-dire telle que demandé par exemple par le conducteur, la position de consigne saturée, c'est-à-dire la consigne respectée par l'actionneur à sa vitesse d'actionnement maximum et la position de consigne saturée et filtrée, c'est-à-dire la position de consigne saturée avec une prise en compte des effets de la régulation de l'actionneur sur sa dynamique, ces courbes étant représentées avec des pointillés différents.

Le filtre utilisé peut se composer d'une limitation de pente puis d'un filtre d'ordre 2. La limitation de pente permet la modélisation de la vitesse maximale de l'actionneur de distribution variable tandis que le filtre du deuxième ordre permet la modélisation de l'actionneur avec son asservissement de position.

Comme montré à la figure 4, la position de consigne saturée et filtrée, référencée Pos VTT cons sat filt à la figure 3, est ensuite utilisée pour déterminer la dynamique de position qui n'a pas encore été observée sur la mesure de position. Il est ainsi calculé un gradient de la position de consigne, ici un gradient de la position de consigne saturée et filtrée, référencé Grad pos VTT cons sat filt à cette figure 4.

Comme montré à la figure 5, en parallèle du calcul du gradient de position de consigne saturée et filtrée, il est calculé des horizons de prédiction, qui sont la durée séparant le moment du calcul, aux instants auxquels la position d'un actionneur spécifique doit être prédite, ces instants pouvant être mesurés selon un angle de vilebrequin.

Ceci est donc fait simultanément au filtrage de la position de consigne et consiste en la détermination des durées séparant l'instant du calcul respectivement à l'instant de fermeture de la soupape d'échappement FE et aux instants d'ouverture et de fermeture de la soupape d'admission OA, FA du cylindre.

A cette figure 5, les abréviations P OA FE désignent la prédiction pour l'ouverture de la soupape d'admission et la fermeture de la soupape d'échappement, P OA FA la prédiction pour l'ouverture et la fermeture de la soupape d'admission, H P OA FE l'horizon de prédiction pour l'ouverture de l'admission et la fermeture de la soupape d'échappement et H PFA l'horizon de prédiction pour la fermeture de la soupape d'admission, le trait de Calcul symbolisant l'instant de début du calcul.

Le calcul des horizons de prédiction est effectué pour le cylindre actuellement en phase d'échappement à une fréquence fixe, par exemple de 5 à 10 millisecondes. Sur un moteur quatre cylindres, les deux horizons de prédiction peuvent avoir le comportement montré à la figure 6, la courbe en pointillés représentant l'horizon de prédiction pour la fermeture de la soupape d'admission et la courbe en trait plein représentant l'horizon de prédiction pour l'ouverture de l'admission et la fermeture de la soupape d'échappement.

Comme il a été précédemment mentionné, l'instant de calcul, l'instant de fermeture de la soupape d'échappement FE et les instants d'ouverture et de fermeture de la soupape d'admission OA, FA peuvent être référencés en fonction de l'angle de vilebrequin du moteur que le vilebrequin prend auxdits instants en donnant respectivement un angle de calcul, un angle de fermeture de la soupape d'échappement FE et des angles d'ouverture et de fermeture de la soupape d'admission OA, FA, comme illustré à la figure 2.

En se référant à toutes les figures, il peut être procédé aux mesures courantes de l'angle de fermeture de la soupape d'échappement et des angles d'ouverture et de fermeture de la soupape d'admission. A ces mesures courantes est additionné le produit du gradient de position de consigne saturée et filtrée, référencé Grad pos VTT cons sat filt, avec la durée correspondante séparant l'instant du calcul respectivement à l'instant de fermeture de la soupape d'échappement FE ou aux instants d'ouverture et de fermeture de la soupape d'admission OA, FA du cylindre pour l'obtention d'un instant de fermeture de la soupape d'échappement et d'instants d'ouverture et de fermeture de la soupape d'admission corrigés.

Le produit de l'horizon de prédiction et du gradient de position de consigne, ici la position de consigne saturée et filtrée permet donc de déterminer la prédiction de déplacement de chacun des angles de distribution considérés. Chacune de ces prédictions de déplacement est ensuite additionnée à la position mesurée courante de l'angle de distribution considéré afin de reconstruire respectivement l'angle OA, FE ou FA prédit.

En variante de la présente invention, il est possible d'utiliser une stratégie intermédiaire entre la stratégie actuelle et celle divulguée comme principal mode de réalisation de la présente demande, c'est-à-dire un fonctionnement avec une réserve de couple par l'avance réduite, mais non nulle, conjointement à l'utilisation d'une dynamique des actionneurs élevée.

La présente invention concerne aussi un moteur thermique à injection indirecte comprenant des actionneurs de distribution variable pour les soupapes d'admission du moteur et les soupapes d'échappement des cylindres du moteur, le moteur thermique étant piloté par un contrôle moteur comportant un calculateur, le calculateur étant agencé pour mettre en oeuvre un procédé tel que précédemment décrit, ceci dans un véhicule automobile qui peut être aussi objet de la présente invention.

Le moteur peut fonctionner avec des lois de levée de soupapes comme précédemment décrites.

L'utilisation d'actionneurs de distribution variable plus rapides pourrait permettre de réduire de manière significative la consommation des véhicules, par exemple de plus de 2%. De plus, l'agrément moteur serait amélioré. L'impact sur l'architecture moteur pourrait rester limité puisqu'il s'agit uniquement de remplacer les actionneurs de distribution variable hydrauliques actuels par des actionneurs plus rapides, par exemple hydrauliques ou plus probablement électriques. Le surcoût de cette technologie reste de plus modéré par rapport au gain de consommation attendu.

L'intérêt d'un tel procédé de prédiction est d'améliorer la maîtrise de la richesse en transitoire. Ceci permet de réduire les émissions polluantes à la source et ainsi de pouvoir par exemple réduire le dimensionnement du système de dépollution, notamment la taille du ou des catalyseurs ou de réduire la consommation, par exemple en évitant une pauvreté du moteur en transitoires qui imposent des enrichissements systématiques dans ce cas là.

L'invention n'est nullement limitée aux modes de réalisation décrits et illustrés qui n'ont été donnés qu'à titre d'exemples.

## Revendications

1. Procédé d'estimation de la masse d'air (P masse air) enfermée dans la chambre de combustion d'un cylindre de moteur thermique de véhicule automobile à distribution variable, le cylindre comprenant des soupapes d'admission et d'échappement actionnées chacune par un actionneur de distribution variable spécifique, comprenant les étapes de :
- mesure de la position courante des actionneurs de distribution variable pour chacune des soupapes du cylindre,
- prédiction de l'instant de fermeture de la soupape d'échappement (FE) et des instants d'ouverture et de fermeture de la soupape d'admission (OA, FA), en fonction des positions courantes mesurées,
- estimation de la masse d'air (P masse air) estimée à partir des instants de fermeture de la soupape d'échappement (FE) et des instants d'ouverture et de fermeture de la soupape d'admission (OA, FA) prédits,
- dans l'étape de prédiction, la position courante de chacun desdits actionneurs de distribution variable étant corrigée en fonction de la position de consigne (Pos VTT cons sat filt) de chacun des actionneurs, **caractérisé en ce que** la correction de la position courante mesurée comprend le calcul d'un gradient de position de consigne et le calcul des durées séparant l'instant du calcul respectivement de l'instant de fermeture de la soupape d'échappement (FE) et des instants d'ouverture et de fermeture de la soupape d'admission (OA, FA) du cylindre.

2. Procédé selon la revendication 1, dans lequel l'instant de calcul, l'instant de fermeture de la soupape d'échappement (FE) et les instants d'ouverture et de fermeture de la soupape d'admission (OA, FA) sont référencés en fonction de l'angle de vilebrequin du moteur obtenus auxdits instants en donnant respectivement un angle de calcul, un angle de fermeture de la soupape d'échappement (FE) et des angles d'ouverture et de fermeture de la soupape d'admission (OA, FA).

3. Procédé selon la revendication 2, dans lequel il est procédé aux calculs de l'instant de fermeture de la soupape d'échappement (FE) et des instants d'ouverture et de fermeture de la soupape d'admission (OA, FA) pour le cylindre en phase d'échappement à une fréquence fixe.

4. Procédé selon la revendication 2 ou la revendication 3, dans lequel il est procédé aux mesures courantes de l'angle de fermeture de la soupape d'échappement et des angles d'ouverture et de fermeture de la soupape d'admission, à ces mesures courantes étant additionné le produit du gradient de position de consigne avec la durée correspondante séparant l'instant du calcul respectivement à l'instant de fermeture de la soupape d'échappement (FE) ou aux instants d'ouverture et de fermeture de la soupape d'admission (OA, FA) du cylindre pour l'obtention des instants prédits respectivement de fermeture de la soupape d'échappement, d'ouverture et de fermeture de la soupape d'admission.

5. Procédé selon l'une des revendications 1 à 4, dans lequel la position de consigne de chaque actionneur est une position de consigne saturée et filtrée (Pos VTT cons sat filt).

6. Procédé selon la revendication 5, dans lequel la position de consigne de chaque actionneur (Pos VTT cons sat filt) est saturée et filtrée par une limitation de pente permettant une modélisation de la vitesse maximale de l'actionneur et par un filtre d'ordre deux permettant une modélisation de l'actionneur en ce qui concerne son asservissement en position.

7. Moteur thermique à injection indirecte comprenant des actionneurs de distribution variable pour les soupapes d'admission des cylindres du moteur et les soupapes d'échappement des cylindres du moteur, un moyen de mesure de la position courante des actionneurs de distribution variable et un contrôle moteur comportant un calculateur, le moteur thermique étant piloté par le contrôle moteur, **caractérisé en ce que** le calculateur est agencé pour mettre en oeuvre toutes les étapes d'un procédé selon l'une quelconque des revendications précédentes.

8. Moteur thermique selon la revendication 7, lequel comprend au moins un actionneur de soupape d'admission qui autorise, à ouverture de soupape d'admission et fermeture de soupape d'admission constantes, au moins deux évolutions de la distance d'ouverture de la soupape d'admission et au moins un actionneur de soupape d'échappement qui n'autorise, à ouverture de soupape d'échappement et fermeture de soupape d'échappement constantes, qu'une seule évolution de la distance d'ouverture de la soupape.

9. Véhicule automobile, **caractérisé en ce qu'**il comprend un moteur thermique selon la revendication 7 ou 8.

## Patentansprüche

1. Verfahren zum Schätzen der Luftmasse (P masse air), die in der Brennkammer eines Kraftfahrzeug-Verbrennungsmotorzylinders mit variabler Verteilung eingeschlossen ist, wobei der Zylinder Einlass- und Auslassventile umfasst, die jeweils durch ein spezifisches Stellglied mit variabler Verteilung betätigt werden, mit den folgenden Schritten :
- Messung der aktuellen Position der variablen Verteilungsaktuatoren für jedes der Ventile des Zylinders,
- Vorhersage der Schließzeit des Auslassventils (FE) und der Öffnungs- und Schließzeiten des Einlassventils (OA, FA) basierend auf den aktuell gemessenen Positionen,
- geschätzte Luftmasse (P masse air), die aus den vorhergesagten Auslassventilschließzeiten (FE) und den vorhergesagten Einlassventilöffnungs- und-schließzeiten (OA, FA) geschätzt wird,
- in dem Vorhersageschritt, wobei die aktuelle Position jedes der genannten Aktuatoren mit variabler Verteilung in Abhängigkeit von der Sollposition (Pos VTT cons sat filt) jedes der Aktuatoren korrigiert wird, **dadurch gekennzeichnet, dass** die Korrektur der gemessenen aktuellen Position die Berechnung eines Gradienten der Sollposition und die Berechnung der Zeiten umfasst, die den Zeitpunkt der Berechnung jeweils vom Zeitpunkt des Schließens des Auslassventils (FE) und von den Zeitpunkten des Öffnens und Schließens des Einlassventils (OA, FA) des Zylinders trennen.

2. Verfahren nach Anspruch 1, bei dem die Berechnungszeit, die Auslassventilschließzeit (FE) und die Einlassventilöffnungs- und -schließzeiten (OA, FA) als Funktion des Motorkurbelwellenwinkels, der zu diesen Zeiten erhalten wird, durch Angabe eines Berechnungswinkels, eines Auslassventilschließwinkels (FE) bzw. eines Einlassventilöffnungs- und -schließwinkels (OA, FA) bezogen werden.

3. Verfahren nach Anspruch 2, bei dem die Berechnung der Auslassventilschließzeit (FE) und der Einlassventilöffnungs- und -schließzeiten (OA, FA) für den Zylinder in der Auslassphase mit einer festen Frequenz durchgeführt wird.

4. Verfahren nach Anspruch 2 oder Anspruch 3, bei dem Strommessungen des Schließwinkels des Auslassventils und des Öffnungs- und Schließwinkels des Einlassventils durchgeführt werden, wird das Produkt aus dem Gradienten der Sollposition und der entsprechenden Zeit von der Berechnungszeit bis zum Zeitpunkt des Schließens des Auslassventils (FE) bzw. der Zeiten des Öffnens und Schließens des Einlassventils (OA, FA) des Zylinders zu diesen aktuellen Messungen addiert, um die vorhergesagten Zeiten des Schließens des Auslassventils bzw. des Öffnens und Schließens des Einlassventils zu erhalten.

5. Verfahren nach einem der Ansprüche 1 bis 4, bei dem die Sollposition jedes Stellgliedes eine gesättigte und gefilterte Sollposition ist (Pos VTT cons sat filt).

6. Verfahren nach Anspruch 5, bei dem die Sollposition jedes Stellgliedes (Pos VTT cons sat filt) gesättigt und gefiltert wird durch eine Steigungsbegrenzung, die eine Modellierung der maximalen Geschwindigkeit des Stellgliedes erlaubt, und durch einen Filter zweiter Ordnung, der eine Modellierung des Stellgliedes in Bezug auf seine Lageregelung erlaubt.

7. Wärmekraftmaschine mit indirekter Einspritzung, die Stellglieder mit variabler Verteilung für die Einlaßventile der Motorzylinder und die Auslaßventile der Motorzylinder, Mittel zum Messen der aktuellen Position der Stellglieder mit variabler Verteilung und eine Motorsteuerung mit einem Computer umfaßt, wobei die Wärmekraftmaschine durch die Motorsteuerung angetrieben wird, **dadurch gekennzeichnet, daß** der Computer so angeordnet ist, daß er alle Schritte eines Prozesses gemäß einem der vorhergehenden Ansprüche ausführt.

8. Wärmekraftmaschine nach Anspruch 7, die mindestens ein Einlassventilstellglied, das bei konstanter Einlassventilöffnung und Einlassventilschließung mindestens zwei Änderungen des Einlassventilöffnungsabstandes zulässt, und mindestens ein Auslassventilstellglied, das bei konstanter Auslassventilöffnung und Auslassventilschließung nur eine Änderung des Ventilöffnungsabstandes zulässt, umfasst.

9. Kraftfahrzeug, **dadurch gekennzeichnet, dass** es einen Wärmekraftmaschine nach Anspruch 7 oder 8 umfasst.

## Claims

1. Method for estimating the air mass (P masse air) enclosed in the combustion chamber of a motor vehicle combustion engine cylinder with variable distribution, the cylinder comprising intake and exhaust valves each actuated by a specific variable distribution actuator, comprising the steps of :
- measuring the current position of the variable distribution actuators for each of the valves of the cylinder,
- Prediction of exhaust valve closing time (FE) and intake valve opening and closing times (OA, FA) based on the current measured positions,
- estimation of air mass (P masse air) estimated from the predicted exhaust valve closing times (FE) and the predicted intake valve opening and closing times (OA, FA),
- in the prediction step, the current position of each of said variable distribution actuators being corrected as a function of the set position (Pos VTT cons sat filt) of each of the actuators, **characterized in that** the correction of the measured current position comprises the calculation of a set position gradient and the calculation of the times separating the instant of the calculation respectively from the instant of closure of the exhaust valve (FE) and from the instants of opening and closing of the inlet valve (OA, FA) of the cylinder.

2. Method according to claim 1, wherein the calculation time, the exhaust valve closing time (FE) and the intake valve opening and closing times (OA, FA) are referenced as a function of the engine crankshaft angle obtained at said times by giving a calculation angle, an exhaust valve closing angle (FE) and intake valve opening and closing angles (OA, FA), respectively.

3. Method according to claim 2, in which the calculation of the exhaust valve closing time (FE) and the intake valve opening and closing times (OA, FA) for the cylinder in the exhaust phase is carried out at a fixed frequency.

4. Method according to claim 2 or claim 3, wherein the usual measurements of the closing angle of the exhaust valve and the opening and closing angles of the inlet valve are carried out, the product of the setpoint position gradient and the corresponding time from the calculation time to the time of closing of the exhaust valve (FE) or the times of opening and closing of the inlet valve (OA, FA) of the cylinder is added to these current measurements in order to obtain the predicted times of closing of the exhaust valve, opening and closing of the inlet valve, respectively.

5. Method according to one of claims 1 to 4, in which the setpoint position of each actuator is a saturated and filtered setpoint position (Pos VTT cons sat filt).

6. Method according to claim 5, in which the desired position of each actuator (Pos VTT cons sat filt) is saturated and filtered by a slope limitation allowing a modelling of the maximum speed of the actuator and by a second-order filter allowing a modelling of the actuator with respect to its position control.

7. Indirect injection heat engine comprising variable distribution actuators for the intake valves of the engine cylinders and the exhaust valves of the engine cylinders, means for measuring the current position of the variable distribution actuators and an engine control comprising a computer, the heat engine being driven by the engine control, **characterised in that** the computer is arranged to carry out all the steps of a process according to any one of the foregoing claims.

8. Heat engine according to claim 7, which comprises at least one inlet valve actuator which, with constant inlet valve opening and inlet valve closing, allows at least two changes in the inlet valve opening distance, and at least one exhaust valve actuator which, with constant exhaust valve opening and exhaust valve closing, allows only one change in the valve opening distance.

9. A motor vehicle, **characterised in that** it comprises an heat engine according to claim 7 or 8.
